# EUROPEAN PATENT SPECIFICATION

(11) **EP 2 494 896 B1**
(45) Date of publication and mention of the grant of the patent: **14.11.2018**
(21) Application number: 10826944.0
(22) Date of filing: 25.03.2010
(51) Int. Cl.: A47J 36/34

(54) **DETACHABLE HANDLE FOR COOKING VESSELS**
ABNEHMBARER GRIFF FÜR KOCHGEFÄSSE
MANCHE AMOVIBLE POUR RÉCIPIENT DE CUISSON

(30) Priority: 27.10.2009 KR 20090102041
(43) Date of publication of application: 05.09.2012
(73) Proprietor: Kim, Myung-Im, Kyungnam 621-050 (KR)
(72) Inventor: Kim, Myung-Im, Kyungnam 621-050 (KR)
(74) Representative: Treeby, Philip David William
(86) International application number: PCT/KR2010/001841
(87) International publication number: WO 2011/052859

(56) References cited:
- JP-A- 9 164 085
- JP-A- 2001 037 655
- KR-B1- 100 883 904
- KR-Y1- 200 425 408
- US-A- 5 704 092
- US-A1- 2006 081 136
- US-A1- 2009 039 096

## Description

### Technical Field

The present invention relates to a detachable cookware handle. More particularly, the present invention relates to a detachable cookware handle configured to, according to need, simply and conveniently detach the handle coupled to cookware.

### Background Art

In general, cookware such as a pot and a frying pan is wares manufactured to boil or cook food and drink. The cookware includes a wares body and a handle. The wares body has a housing space for putting food and drink. The handle extends from one side of the wares body to lift up and move the wares body to a heating device.

However, the conventional handle provided for cookware is manufactured in a non-detachable structure, so there is a problem that it increases a volume of the wares body and, upon safekeeping, suffers a spatial limitation.

On the other hand, the prior art for fixing the above problem Korean Utility Model Laid-Open No. 20-2000-0017954 (title: COOKWARE HANDLE).

An object of the prior art is to construct a handle provided for cookware to be detachable in a one-touch way to reduce a volume of the cookware, thus realizing a convenience of safekeeping.

However, the handle of the prior art necessarily has to have a fixation fragment (i.e., a bracket) on a pot body in order to realize an attachment/detachment function. Thus, there is a problem of not being capable of attaching the handle to other cookware not having the fixation fragment, for use. A detachable cookware handle is also known from US2006/0081136A.

### Disclosure

### Technical Problem

Accordingly, the present invention is directed to a detachable cookware handle that substantially obviates one or more of the problems due to limitations and disadvantages of the related art.

An object of exemplary embodiments of the present invention is to provide a detachable cookware handle being capable of detaching the handle coupled to cookware, according to need.

Another aspect of exemplary embodiments of the present invention is to provide a detachable cookware handle being capable of simply and conveniently fixing the handle to a variety of cookware manufactured at various thicknesses, irrespective of a thickness of the cookware.

A further aspect of exemplary embodiments of the present invention is to provide a detachable cookware handle being capable of preventing artificial detachment of the handle in a cookware use process, thus preventing the danger of a safety accident.

### Technical Solution

To achieve these and other advantages and in accordance with the purpose of the present invention, as embodied and broadly described, there is provided a detachable cookware handle comprising the features of claim 1.

Preferably, a plate is extended and formed at a lower end of the button slider and, according to a movement of the button slider, the plate pushes the locker and releases the restraint of the tilting lever.

Preferably, a spring is caught at its one end by the tilting lever and is caught at the other end by the slider, and elastically supports the tilting lever and the slider.

### Advantageous Effects

A detachable cookware handle according to the present invention realizes an effect of, because of being capable of detachably coupling the handle to cookware according to need, being capable of promoting a convenience of use such as simply and conveniently keeping the cookware even in a narrower space.

Also, the present invention has a rising effect of being capable of making use easily grafting onto cookware manufactured at various thicknesses irrespective of a thickness of cookware by elastically moving a pressure part according to the thickness of the cookware and, in addition, being capable of accomplishing a simplicity and convenience of use by implementing a handle detachment work at only one stroke in a one-touch way.

### Description of Drawings

FIG. 1 is a three-dimensional diagram illustrating a handle detached from cookware according to a preferable exemplary embodiment of the present invention;
FIG. 2 is a exploded diagram illustrating a construction of a detachable cookware handle illustrated in FIG. 1; and
FIGS. 3 and 4 are diagrams illustrating a use state of a detachable cookware handle according to the present invention.

### < Description of key symbols of the drawings>

| | | | |
|---|---|---|---|
| 10: | handle body | 22: | button slider |
| 30: | tilting lever | 36: | slider |
| 40: | pressure part | 46: | locker |

### Best Mode for Carrying out the Invention

Hereinafter, exemplary embodiments of the present invention will be described with reference to accompanying drawings. In a detailed description to be described below, representative exemplary embodiments of the present invention will be presented to achieve the aforementioned technical solutions.

The present invention is to realize a detachable cookware handle configured to make a slider reverse according to an operation of retracting a tilting lever coupled by a hinge to a bottom side of a handle body and attach a pressure part to an inner circumference surface of cookware, thus fixing the handle to a wares body and in addition, when detaching the handle to keep the cookware, restore the tilting lever to the initial state by only activating a button slider and release the attachment of the pressure part, thus detaching the handle from the cookware at only one stroke.

Exemplary embodiments of the present invention will be described below with reference to the accompanying drawings.

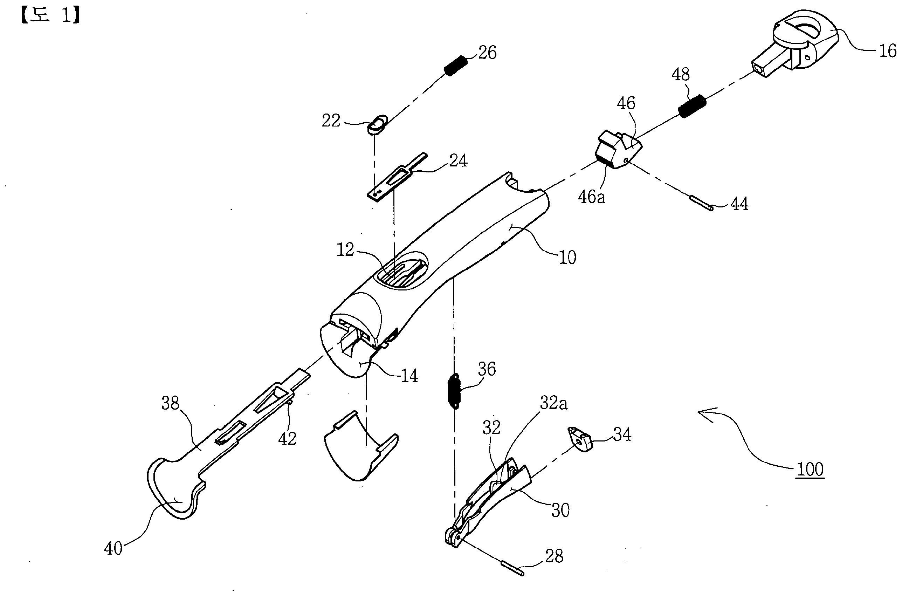

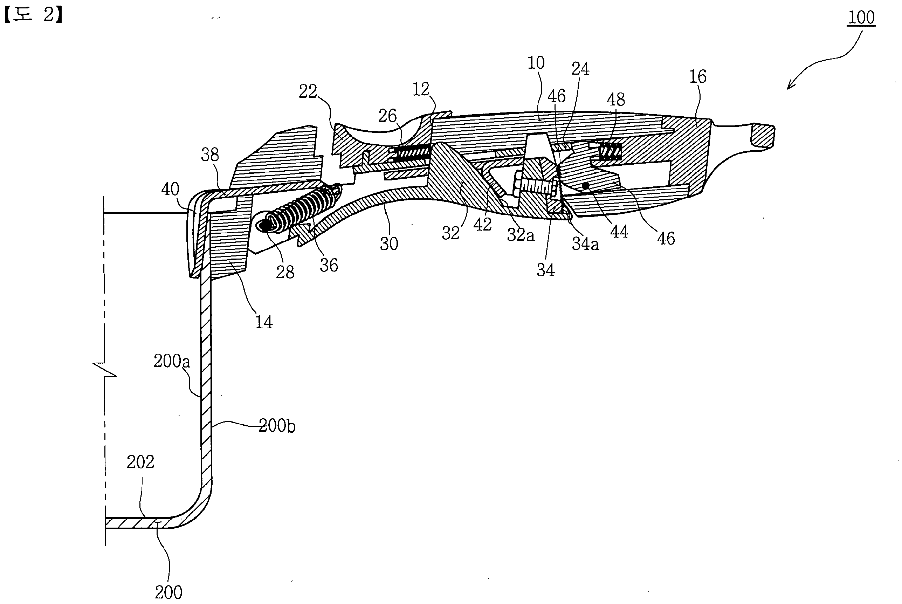

FIGS. 1 and 2 are three-dimensional diagrams illustrating a construction of a detachable cookware handle according to an exemplary embodiment of the present invention.

As illustrated in FIGS. 1 and 2, commonly, cookware is of a cylindrical shape and is manufactured such that its upper end is opened and a housing space 202 capable of storing food and drink therein is provided. The handle 100 of the present invention is assembled to a sidewall of cookware 200 and is used for the purpose of safely moving the cookware 200. At this time, the handle 100 is characterized in that it is fixed to be detachable from the cookware 200. In the following description, a structure of the handle 100 is described in detail.

The detachable cookware handle 100 proposed in the present invention has a predetermined length and has a space formed therein, and has a contact part 14 attached at its front end to an outer circumference surface 200b of the cookware 200, and constructs an exterior shape by a handle body 10 having a long hole 12 formed at its upper end, and a cap 16 coupled by a bolt to a rear of the handle body 10.

A handle fixing member 20 is installed in the handle body 10. The handle fixing member 20, which is a means detachably fixing the handle 100 to the cookware 200, includes a button slider 22, a tilting lever 30, a slider 38, and a locker 46.

The button slider 22, which is a means for activating the locker 46 restraining the tilting lever 30 to detach the handle 100 assembled to the cookware 200, is fitted into the long hole 12 of the handle body 10 to be front/rear slide movable. A plate 24 is integrally extended and formed at a lower end of the button slider 22. The plate 24 pushes the locker 46 coupled by a pin 44 to the handle body 10 according to a slide movement operation of the button slider 22 and rotates the locker 46 centering on the pin 44. As the locker 46 rotates by an operation of the plate 24, the locker 46 releases restraint of the tilting lever 30 and restores the tilting lever 30 to the initial state.

A spring 26 elastically supporting the slide movement of the button slider 22 is further installed between the button slider 22 and the handle body 10.

The tilting lever 30 is a lever coupled by a shaft 28 at its front end to the handle body 10 in a state where the tilting lever 30 is fitted to a bottom of the handle body 10. The tilting lever 30 pulls the slider to the rear in a process of rotating centering on the shaft 28 according to external press operation, and attaches and fixes a pressure part 40 bent and formed at a front end of the slider to an inner circumference surface of the cookware 200. In detail, it is constructed to protrude and form a protrusion 32 having one surface formed to be tilted (32a) at a center of the tilting lever 30 and move up/down according to a rotation operation of the tilting lever 30, and it is constructed to make a guide fragment 42 of the slider 38 get in surface contact with the tilt 32a of the protrusion 32 and, if the tilting lever 30 is rotation operated centering on the hinge 28, push the guide fragment 42 to the rear in a process in which the tilt 32a of the protrusion 32 moves riding the guide fragment 42, thereby resultantly being capable of moving the slider 38 to the rear by a rotation operation of the tilting lever 30.

Also, a catcher 34 having a wedge-shape rugged part 34a is installed at a rear and top side of the tilting lever 30. After the catcher 34 enters into the handle body 10 according to an operation of the tilting lever 30, the catcher 34 is rotation operated in engagement of the rugged part 34a of the catcher 34 with the locker 46, preferably, a wedge-shape rugged part 46a formed in the locker 46 and then, catches and fixes the tilting lever 30 inserted to the bottom of the handle body 10.

Also, the spring 36 is constructed to be caught at one end by the tilting lever 30 and be caught at the other end by the slider 38. In a state where the spring 36 elastically supports the rotation of the tilting lever 30, if restraint of the tilting lever 30 is released by rotation of the locker 46, the spring 36 automatically restores the tilting lever 30 to the initial state by a tension force and in addition to this, pulls even the slider 38 to the front and automatically restores the slider 38 to the initial state.

The slider 38 is a means fitted between the button slider 22 and the tilting lever 30 and, at its front end, the pressure part 40 is integrally bent and constructed downward. In a process in which the slider 38 is pushed to the rear by an operation of the tilting lever 30 in a state of being exposed outside the handle body 10, the pressure part 40 is attached to an inner circumference surface 200a of the cookware 200, and fixes the handle 100 to the cookware 200.

Also, the guide fragment 42 is integrally extended and formed at a center of the slider 38 to be tilted downward at a predetermined angle. In a state where the guide fragment 42 gets in surface contact with the tilt 32a formed in the protrusion 32 of the aforementioned tilting lever 30, if the tilting lever 30 is rotation operated centering on the hinge 28, the tilt 32a of the protrusion 32 pushes the guide fragment 42 to the rear in a process in which the tilt 32a moves riding the guide fragment 42 and accordingly, the slider 38 moves to the rear, so attaches the pressure part 40 to the inner circumference surface 300a of the cookware 200.

The slider 38 is constructed connecting by the spring 36 with the tilting lever 30 such that the restraint of the tilting lever 30 can be released and simultaneously, automatically restored to the initial state together with the tilting lever 30 using a tension force of the spring 36.

The locker 46 is coupled by the pin 44 with the handle body 10 in a state where the locker 46 is inserted into the handle body 10. The locker 46 forms a different rugged part 46a corresponding to the rugged part 34a at its one surface to be engaged with the rugged part 34a formed in the catcher 34 of the tilting lever 30, and restrains the tilting lever 30. The above locker 46 rotates and operates starting from the pin 44 by the plate 24 that is pushed to the rear according to a sliding operation of the aforementioned button slider 22, and disengages the rugged part 46a of the locker 46 engaged with the rugged part 34a of the catcher 34, releasing the restraint of the tilting lever 30.

The spring 48 is installed between the locker 46 and the cap 16. In a state where the spring 48 elastically supports the locker 46 rotation operating by a press pressure of the aforementioned plate 24, if the press pressure of the plate 24 is released, the spring 48 restores the locker 46 to the initial state.

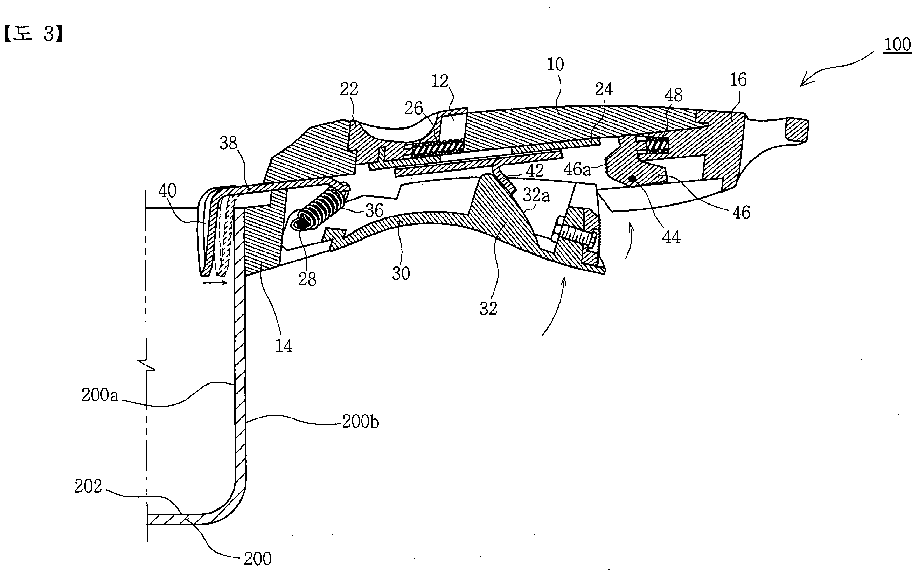

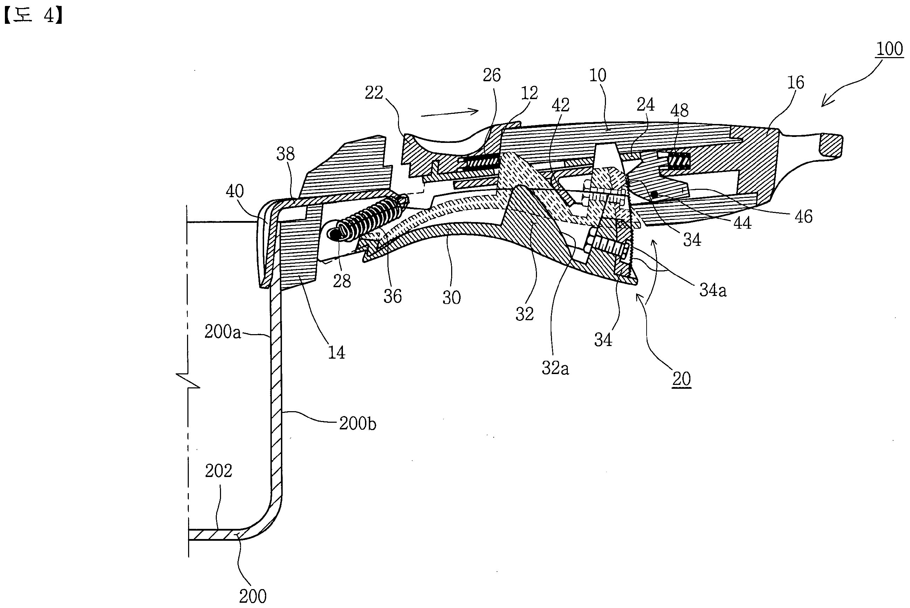

Below, an operation of the detachable cookware handle according to the present invention is described with reference to accompanying FIGS. 3 and 4.

First, when intending to assemble the handle 100 of the present invention to one side of the cookware 200, as in FIG. 3, after a sidewall of the cookware 200 is fitted into a space between the contact part 14 of the handle body 10 and the pressure part 40 of the slider 38, if pressing the tilting lever 30 coupled by the shaft 28 to the bottom of the handle body 10, the tilting lever 30 is rotated centering on the shaft 28. In this process, the tilt 32a of the protrusion 32 provided in the tilting lever 30 moves riding the guide fragment 42 provided in the slider 40 and pushes the guide fragment 42 to the rear, so the slider 40 moves to the rear and accordingly, the pressure part 42 provided in the slider 40 is attached to the inner circumference surface of the cookware 200, pressing and fixing the handle 100 to the cookware 200.

At this time, if the tilting lever 30 rotates and is inserted into the handle body 1, the rugged part 34a of the catcher 34 provided in the tilting lever 30 is engaged with the rugged part 34a of the locker 46 coupled by the pin 44 to the internal of the handle body 10, thereby restraining the tilting lever 30 such that the tilting lever 30 is not restored to the initial state by the tension force of the spring 48.

On the other hand, in use process, when intending to detach the handle 100 from the cookware 200, as in FIG. 4, if pulling the button slider 22 to the rear, the plate 24 provided in the button slider 22 pushes the locker 46 coupled by the pin 44 to the handle body 10 and accordingly, the locker 46 rotates centering on the pin 44 and disengages the rugged part 46a of the locker 46 from the rugged part 34a of the catcher 34 and releases the restraint of the tilting lever 30.

The restraint of the tilting lever 30 is released and simultaneously, the tilting lever 30 is rotated centering on the shaft 28 through the tension force of the spring 36 and is restored to the initial state and, in addition to this, even the slider 38 is pulled to the front through the tension force of the spring 36 and is restored to the initial state. At this time, the guide fragment 42 of the slider 38 is in contact with the tilt 32a formed in the protrusion 32 of the tilting lever 30, but does not interfere in the tilt 32a according to the restoration operation of the tilting lever 30, thereby not interrupting the forward movement of the slider 38.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims and their equivalents.

## Claims

1. A detachable cookware handle (100) comprising:
a handle body (10) having a long hole through-formed at its upper end, having a space therein, and having a cap (16) coupled and formed in its rear;
a button slider (22) fitted into the long hole (12) of the handle body (10) to be slide movable;
a tilting lever (30) coupled by a hinge (28) with the handle body (10), operable to rotate centering on the hinge (28) according to an external press pressure, and inserted to a bottom of the handle body (10);
a protrusion (32) formed at an upside of the tilting lever (30), having one surface formed to be tilted (32a), and moving up/down according to an operation of the tilting lever (30) ;
a slider (38) fitted between the button slider (22) and the tilting lever (30), providing a guide fragment (42) getting in surface contact with the tilt (32a) of the protrusion (32) at its bottom side, and moving and operating to the rear according to a rotation operation of the tilting lever (30);
a pressure part (40) bent downward and constructed at a front end of the slider (38), and attached and fixed to an inner circumference surface (200a) of cookware (200) according to a movement of the slider (38);
**characterized by**:
a catcher (34) having a rugged part (34a) installed at a rear and top side of the tilting lever (30); and
a locker (46) coupled by a pin (44) to the internal of the handle body (10), having a different rugged part (46a) engaged with the rugged part (34a) of the catcher (34), and restraining the tilting lever (30) inserted to the bottom of the handle body (10).

2. The detachable cookware handle of claim 1, **characterized in that** a plate (24) is extended and formed at a lower end of the button slider (22) and, according to a movement of the button slider (22), the plate (24) pushes the locker (46) and releases the restraint of the tilting lever (30) .

3. The detachable cookware handle of claim 2, **characterized in that** a spring (36) is caught at its one end by the tilting lever (30) and is caught at the other end by the slider (38), and elastically supports the tilting lever (30) and the slider (38).

## Patentansprüche

1. Lösbarer Kochgeschirrgriff (100), Folgendes umfassend:
einen Griffhauptteil (10) mit einem Langloch, das an seinem oberen Ende durchgehend gebildet ist, mit einen Raum darin, und der eine Kappe (16) aufweist, die an seinen hinteren Teil gekoppelt und daran gebildet ist,
einen Schiebeknopf (22), der in das Langloch (12) des Griffhauptteils (10) eingepasst ist, um gleitend beweglich zu sein,
einen Neigehebel (30), der durch ein Gelenk (28) mit dem Griffhauptteil (10) gekoppelt und dafür funktionsfähig ist, gemäß einem äußeren Druck mittig auf dem Gelenk (28) zu drehen, und in eine Unterseite des Griffhauptteils (10) eingesetzt ist,
einen Vorsprung (32), der an einer Oberseite des Neigehebels (30) gebildet ist, eine Oberfläche aufweist, die dafür gebildet ist, geneigt (32a) zu sein, und der sich gemäß einem Betreiben des Neigehebels (30) auf-/abwärts bewegt,
ein Gleitstück (38), dass zwischen dem Schiebeknopf (22) und dem Neigehebel (30) eingepasst ist, ein Führungsfragment (42) bereitstellend, das an der Unterseite des Vorsprungs (32) in Oberflächenkontakt mit dessen Neigung (32a) tritt und sich gemäß einem Drehvorgang des Neigehebels (30) zum hinteren Teil bewegt und arbeitet,
ein Druckteil (40), das nach unten gebogen und an einem vorderen Ende des Gleitstücks (38) erstellt ist sowie gemäß einer Bewegung des Gleitstücks (38) an einer innen umlaufenden Oberfläche (200a) von Kochgeschirr (200) angebracht und befestigt ist,
**gekennzeichnet durch**:
eine Fangvorrichtung (34) mit einem stabilen Teil (34a), das an einer hinteren und oberen Seite des Neigehebels (30) eingebaut ist, und
eine Verriegelung (46), die durch einen Stift (44) an das Innere des Griffhauptteils (10) gekoppelt ist und einen anderen stabilen Teil (46a) aufweist, der mit dem stabilen Teil (34a) der Fangvorrichtung (34) in Eingriff gebracht ist und den Neigehebel (30) eingesetzt in die Unterseite des Griffhauptteils (10) hält.

2. Lösbarer Kochgeschirrgriff nach Anspruch 1, **dadurch gekennzeichnet, dass** an einem unteren Ende des Schiebeknopfs (22) eine Platte (24) verläuft und gebildet ist und die Platte (24) gemäß einer Bewegung des Schiebeknopfs (22) auf die Verriegelung (46) drückt und das Halten des Neigehebels (30) löst.

3. Lösbarer Kochgeschirrgriff nach Anspruch 2, **dadurch gekennzeichnet, dass** eine Feder (36) an ihrem einen Ende von dem Neigehebel (30) und an dem anderen Ende durch das Gleitstück (38) erfasst ist und den Neigehebel (30) und das Gleitstück (38) elastisch trägt.

## Revendications

1. Manche amovible pour élément de batterie de cuisine (100) comportant :
un corps de manche (10) ayant un long trou formé de manière traversante au niveau de son extrémité supérieure, ayant un espace dans celui-ci, et ayant un embout (16) accouplé et formé dans sa partie arrière ;
un curseur à bouton (22) adapté dans le long trou (12) du corps de manche (10) en mesure d'être mobile de manière coulissante ;
un levier d'inclinaison (30) accouplé par une charnière (28) au corps de manche (10), servant à des fins de rotation de manière centrée sur la charnière (28) en fonction d'une pression de compression externe, et inséré sur une partie inférieure du corps de manche (10) ;
une partie saillante (32) formée au niveau d'un côté supérieur du levier d'inclinaison (30), ayant une surface formée à des fins d'inclinaison (32a), et se déplaçant vers le haut/vers le bas en fonction d'un actionnement du levier d'inclinaison (30) ;
un curseur (38) adapté entre le curseur à bouton (22) et le levier d'inclinaison (30), mettant en oeuvre un fragment de guidage (42) se mettant en contact de surface avec la partie d'inclinaison (32a) de la partie saillante (32) au niveau de son côté inférieur, et se déplaçant et fonctionnant vers l'arrière en fonction d'une opération de rotation du levier d'inclinaison (30) ;
une partie exerçant une pression (40) pliée vers le bas et construite au niveau d'une extrémité avant du curseur (38), et attachée et fixée au niveau d'une surface circonférentielle intérieure (200a) d'un élément de batterie de cuisine (200) en fonction d'un mouvement du curseur (38) ;
**caractérisé par** :
un dispositif de réception (34) ayant une partie rugueuse (34a) installé au niveau d'un côté arrière et supérieur du levier d'inclinaison (30) ; et
un dispositif de verrouillage (46) accouplé par une broche (44) au niveau de la partie interne du corps de manche (10), ayant une partie rugueuse différente (46a) mise en prise avec la partie rugueuse (34a) du dispositif de verrouillage (34), et retenant le levier d'inclinaison (30) inséré sur la partie inférieure du corps de manche (10).

2. Manche amovible pour élément de batterie de cuisine selon la revendication 1, **caractérisé en ce qu'**une plaque (24) est étendue et formée au niveau d'une extrémité inférieure du curseur à bouton (22) et, en fonction d'un mouvement du curseur à bouton (22), la plaque (24) pousse le dispositif de verrouillage (46) et libère la retenue du levier d'inclinaison (30).

3. Manche amovible pour élément de batterie de cuisine selon la revendication 2, **caractérisé en ce qu'**un ressort (36) est capturé au niveau d'une extrémité de celui-ci par le levier d'inclinaison (30) et est capturé au niveau de l'autre extrémité par le curseur (38), et supporte de manière élastique le levier d'inclinaison (30) et le curseur (38).
